Europäisches Patentamt

European Patent Office

Office européen des brevets

(11) Publication number: **0 418 210 A1**

# EUROPEAN PATENT APPLICATION

(21) Application number: **90870144.4**

(22) Date of filing: **12.09.90**

(51) Int. Cl.⁵: **C08K 5/00**, C08L 77/00,
//(C08K5/00,5:12,5:3492)

(30) Priority: **15.09.89 US 407464**

(43) Date of publication of application:
**20.03.91 Bulletin 91/12**

(84) Designated Contracting States:
**AT BE CH DE DK ES FR GB GR IT LI LU NL SE**

(71) Applicant: **MONSANTO COMPANY**
**Patent Department 800 North Lindbergh**
**Boulevard**
**St. Louis, Missouri 63167(US)**

(72) Inventor: **Jenkins, George H.**

**Deceased(US)**
Inventor: **Sprenkle, William Edward, Jr.**
**149 Woodlawn Street**
**Springfield, Massachusetts 01108(US)**

(74) Representative: **Ernst, Hubert et al**
**Monsanto Services International S.A., Patent**
**Department, Avenue de Tervuren 270-272,**
**Letter Box No. 21**
**B-1150 Brussels(BE)**

(54) Flame retardant nylon moulding resins with improved physical properties.

㊗ A flame retardant nylon molding resin with improved physical properties comprising a nylon resin, melamine cyanurate flame retardant and either diundecyl phthalate or dioctyl phthalate as a wetting agent.

EP 0 418 210 A1

# FLAME RETARDANT NYLON MOLDING RESINS WITH IMPROVED PHYSICAL PROPERTIES

Background of the Invention:

The present invention relates to flame retardant polyamide molding resins with improved physical properties. More particularly, it relates to a polyamide molding resin containing a melamine cyanurate flame retardant and an alkyl phthalate compatabilizer or wetting agent.

Melamine and other triazines and certain salts of said compounds are known to function as flame retardants when melt blended in polyamides at from above 5% by weight to about 20% by weight. It is believed that the means by which the flame retardancy is brought about is through the thermal decomposition of said additive (gas phase) which blankets the burn site so as to exclude oxygen.

It is also known, however, that the triazines, including melamine are highly incompatible in polyamide as well as other polymers. While melamine cyanurate is slightly more compatible in polyamides than melamine per se, the use of same without a wetting agent or the like is not recommended in that the salt particles of the compound act as voids within the polymer thus forming stress concentration points which adversely impact on the physical properties such as toughness, elongation and impact resistancy of parts molded from the polymers. In addition, during molding, unwetted additive particles tend to separate from the polymer surface and plate out on the mold. This effect lowers the flame retardant content and produces an undesirable "bloom" effect on the surface of the molded part.

With the addition of other flame retardant agents such as halogenated hydrocarbons and flame retardant synergist such as zinc, zinc oxide, etc., the addition of triazine salts in flame retardant quantities diminishes the physical properties of the final mold product. In order to overcome this problem it has been suggested to add of from 0.1% to 10% by weight of a plasticizer that is a non-polar ester, i.e., esters of $C_6$ to $C_{10}$ aliphatic and aromatic acids such as dibutyl adipate, dibutyl sebacate, diundecyl phthalate etc. See U.S. Patents 4,006,115 and 4,085,080 to Donald Lee Elbert.

While both of said patents noted above also indicate that fire retardants can also be added to plasticized nylon molding resins, said fire retardants are of the halogenated hydrocarbon type which may be used with a metal or metallic compound synergist. Melamine cyanurates are not disclosed or suggested in that the retardancy mechanism of the halogenated hydrocarbons is different from that of the melamine cyanurate, i.e., non-drip versus drip. In addition, it is known that in general all phthalates are detrimental to the flame resistance qualities of nylon 66/melamine cyanurate compositions as phthalate wetting agents represent a fuel source which promotes flaming drips during burn testing.

In view of the above, it is totally unexpected that a nylon/melamine cyanurate composition which includes a phthalate wetting agent would have both acceptable flammability and good ductility.

Summary of the Invention:

The present invention, therefore, provides a composition comprising a nylon resin, melamine cyanurate flame retardant and a phthalate wetting agent. Items molded from said composition have a flame retardant rating of V-0 when tested according to Underwriters Laboratory Test No. UL-94 and excellent physical properties.

As stated above, the molding composition of the present invention comprises a nylon resin, melamine cyanurate flame retardant and a phthalate wetting agent. The nylon resin portion of said composition may be selected from any of the polyamides commonly referred to as nylons. This includes, for example, nylon 6, nylon 66, nylon 6,9, nylon 6,10, etc. It is also believed that the invention herein is useful in resin compositions comprising copolymers of one type of nylon with another. Said nylon resins may be present in amounts of from 83% by weight to about 92.5% by weight.

The melamine cyanurate flame retardant used in the present invention is of the same type as disclosed in U.S. Patent 4,317,766 to Kawaski et al, i.e., is is ground to a particle size of at most 35 microns. Said flame retardant when compounded with the nylon resin and the wetting agent may be present in amounts of from about 6% by weight to about 15% by weight, preferably from about 8% by weight to about 12% by weight.

With regard to the phthalate wetting agent employed in the composition of the invention, while it is clear from the prior art that the addition of many of said compounds to nylon resins will improve the physical properties of the ultimate compositions, phthalate esters in general are believed to be detrimental to the flammability of said compositions. It has been found, however, that diundecyl phthalate (DUP) and dioctyl phthalate (DOP), when employed with high loadings of melamine cyanurate flame retardant and a nylon resin will provide excellent flame retardancy coupled with excellent physical properties. It is believed that the reason for this unexpected behavior of said two phthalates lies in the fact that each has a low melting point and low volatility. While the preferred range by weight % for use of said phthalates is 1 to 2%, a broader range of from about 0.5% by weight to about 2.0% by weight is applicable for DUP, while a broader range of from about 1% by weight to about 2.5% by weight is applicable for DOP.

Specific Embodiments:

The compositions of the present invention are described in more detail with reference to the following Examples which are for purposes of illustration only and are not to be understood or indicating or implying any limitations on the broad invention described herein. Except where otherwise stated all parts are by weights.

Example 1

To 92 parts of nylon 66 were added 8 parts of fine particle size melamine cyanurate supplied by Biddle-Sawyer Corporation. This blend was compounded in a high intensity twin screw extruder with co-rotating, non-intermeshing screws and a 24:1 length/diameter ratio, at 255°C ± 5C°. One half of the extruder barrel length was under vacuum.

Test specimens of the compounded blend were then injection molded at 275-280°C and tested for tensile elongation at fail per ASTM D638-876 (type 1 specimen, 0.2 in./min. speed, 5 specimens), flammability per Underwriters Laboratory Test No. UL-94 (vertical burn) and notched Izod impact strength per ASTM D256-87 (5 specimens, 1/8" thickness).

The results appear below in Table I.

The following examples are presented to illustrate the parameters of the present invention and demonstrate the effect of using a phthalate wetting agent as a dispersant for melamine cyanurates. All samples were prepared and tested as described in Example 1 and the results appear below in Table I. Compositions employed in each Example are as follows:

Example 2
89.0 parts of nylon 66
2.0 parts of diundecyl phthalate (DUP)
9.0 parts of melamine cyanurate

Example 3
89.0 parts of nylon 66
2.0 parts of dioctyl phthalate (DOP)
9.0 parts of melamine cyanurate

Example 4
89.0 parts of nylon 66
2.0 parts of dibutyl phthalate (DBP)
9.0 parts of melamine cyanurate

Example 5
89.0 parts of nylon 66
2.0 parts of diphenyl phthalate (DPP)
9.0 parts of melamine cyanurate

Example 6
89.0 parts of nylon 66
1.5 parts of diundecyl phthalate
9.5 parts of melamine cyanurate

Example 7
89.0 parts of nylon 66
1.5 parts of dioctyl phthalate
9.5 parts of melamine cyanurate

Example 8
89.0 parts of nylon 66
1.5 parts of dibutyl phthalate

9.5 parts of melamine cyanurate

Example 9

89.0 parts of nylon 66

1.5 parts of diphenyl phthalate

9.5 parts of melamine cyanurate

Example 10

89.0 parts of nylon 66

1.5 parts of diundecyl phthalate

9.5 parts of melamine cyanurate

1.0 parts of water

Example 11

89.5 parts of nylon 66

1.5 parts of diundecyl phthalate

9.0 parts of melamine cyanurate

1.0 parts of water

Example 12

88.5 parts of nylon 66

2.0 parts of dioctyl phthalate

9.5 parts of melamine cyanurate

Example 13

88.0 parts of nylon 66

2.5 parts of dioctyl phthalate

9.5 parts of melamine cyanurate

Example 14

89.0 parts of nylon 66

1.5 parts of Edenol W300S (diisotridecyl phthalate) from Henkel

9.5 parts of melamine cyanurate

The following examples are presented to demonstrate the effect of the use of other types of wetting agents in a nylon/melamine cyanurate blend. All samples were prepared and tested as described in Example 1 and the results appear in Table I below. Compositions employed in each example are as follows:

Example 15

89.0 parts of nylon 66

1.5 parts of DC-200 Silicone Oil from Dow-Corning

9.5 parts of melamine cyanurate

Example 16

89.75 parts of nylon 66

0.75 parts of DC-200 Silicone Oil

9.5 parts of melamine cyanurate

Example 17

89.0 parts of nylon 66

1.5 parts of Acrawax C (N,N' - ethylene bisstearamide)

9.5 parts of melamine cyanurate

Example 18

90.0 parts of nylon 66

0.5 parts of Acrawax C

9.5 parts of melamine cyanurate

Example 19

89.0 parts of nylon 66

1.5 parts of Loxiol G-30 [fatty acid ester] from Henkel

9.5 parts of melamine cyanurate

Example 20

89.0 parts of nylon 66

1.5 parts of Loxiol G-40 [fatty acid ester] from Henkel

9.5 parts of melamine cyanurate

Example 21

89.0 parts of nylon 66

1.5 parts of Loxiol G-70 [polymeric complex ester of saturated fatty acids] from Henkel

9.5 parts of melamine cyanurate

4

Example 22
89.0 parts of nylon 66
1.5 parts of Edenol 133 [di(2-ethyl-Hexyl)adipate] from Henkel
9.5 parts of melamine cyanurate

Example 23
89.0 parts of nylon 66
1.5 parts of Edenol 888 [dioctyl sebacate] from Henkel
9.5 parts of melamine cyanurate

Example 24
89.0 parts of nylon 66
1.5 parts of Edenol 1200 [polyadipic acid and propylene diglycol] from Henkel
9.5 parts of melamine cyanurate

TABLE I

| Example No. | Wetting Agent | Conc. % | Tensile Elog. at Fail. % | UL-94 | IZOD Ft.-Lb./In |
|---|---|---|---|---|---|
| 1 | NONE | NONE | 10 | V-0 | 0.55 |
| 2 | DUP | 2.0 | 28 | V-2 | 0.87 |
| 3 | DOP | 2.0 | 22 | V-2 | 0.78 |
| 4 | DBP | 2.0 | 14 | V-0 | 0.80 |
| 5 | DPP | 2.0 | 10 | V-0 | 0.66 |
| 6 | DUP | 1.5 | 39 | V-0 | 0.91 |
| 7 | DOP | 1.5 | 30 | V-0 | 0.85 |
| 8 | DBP | 1.5 | 11 | V-0 | 0.86 |
| 9 | DPP | 1.5 | 10 | V-0 | 0.62 |
| 10 | DUP + $H_2O$ | 1.5 + 1.0 | 42 | V-0 | 0.95 |
| 11 | DUP + $H_2O$ | 1.5 + 1.0 | 45 | V-0 | 0.97 |
| 12 | DOP | 2.0 | 31 | V-0 | 0.94 |
| 13 | DOP | 2.5 | 34 | V-0/V-2 | 0.97 |
| 14 | EDENOL W3OOS | 1.5 | 40 | V-2 | 0.97 |
| 15 | SILICONE OIL | 1.5 | 35 | V-2 | 0.84 |
| 16 | SILICONE OIL | 0.75 | 24 | V-2 | 0.80 |
| 17 | ACRAWAX C | 1.5 | 37 | V-2 | 0.85 |
| 18 | ACRAWAX C | 0.5 | 21 | V-2 | 0.85 |
| 19 | LOXIOL G-30 | 1.5 | 32 | V-2 | 0.86 |
| 20 | LOXIOL G-40 | 1.5 | 40 | V-2 | 1.03 |
| 21 | LOXIOL G-70 | 1.5 | 21 | V-2 | 0.82 |
| 22 | EDENOL 133 | 1.5 | 9 | V-0/V-2 | 0.97 |
| 23 | EDENOL 888 | 1.5 | 32 | V-2 | 0.94 |
| 24 | EDENOL 1200 | 1.5 | 42 | V-2 | 0.97 |

As shown by the results of Examples 1-14, only diundecyl phthalate and dioctyl phthalate provide for good tensile elongation (minimum of 20% load elongation at fail) and impact strength coupled with high flame retardancy. As shown by the results of Examples 15-24 the use of diundecyl phthalate and dioctyl phthalate as wetting agents for nylon/melamine cyanurate molding resins gives substantial unexpected advantages over the use of other wetting agents, particularly with regard to flame retardancy.

It will be understood by those skilled in the art that minor variations in the formulations of the molding resin compositions of the present invention can be made without departing from the spirit of the invention.

## Claims

CLAIM 1. A flame retardant nylon molding resin having improved physical properties, said resin comprising a nylon resin, a flame-retardant amount of melamine cyanurate and a low fuel value phthalate ester wetting agent selected from the group consisting of diundecyl phthalate and dioctyl phthalate.

CLAIM 2. The flame retardant nylon molding resin of claim 1 wherein said nylon resin is present in an amount of from about 83.0% to about 92.5% by weight, said phthalate ester wetting agent is present in an amount of from about 0.5% to about 2.5% by weight and melamine cyanurate is present in an amount of from about 6.0% to about 15.0% by weight.

CLAIM 3. The flame retardant nylon molding resin of claim 1 wherein said phthalate ester wetting agent is diundecyl phthalate.

CLAIM 4. The flame retardant nylon molding resin of claim 3 wherein said diundecyl phthalate is present in an amount of from about 0.5% to about 2.0% by weight.

CLAIM 5. The flame retardant nylon molding resin of claim 1 wherein said phthalate ester wetting agent is dioctyl phthalate.

CLAIM 6. The flame retardant nylon molding resin of claim 5 wherein said dioctyl phthalate is present in an amount of from about 1.0% to about 2.5% by weight.

CLAIM 7. A flame retardant nylon molding resin comprising from about 83.0% to about 92.5% by weight of a nylon resin, from 8.0% to about 12.0% by weight of melamine cyanurate and from about 0.5% to about 2.0% by weight of diundecyl phthalate.

CLAIM 8. A flame retardant nylon molding resin comprising from about 83.0% to about 92.5% by weight of nylon resin, from about 8.0% to about 12.0% by weight of melamine cyanurate and from about 1.0% to about 2.0% of dioctyl phthalate.

European
Patent Office

# EUROPEAN SEARCH REPORT

Application Number

**EP 90 87 0144**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-4 006 115 (D. ELBERT)<br>* claims; column 2, lines 36-47 *<br>– – – | 1 | C 08 K 5/00<br>C 08 L 77/00 //<br>(C 08 K 5/00 |
| A | FR-A-2 564 475 (ATOCHEM)<br>* claims 1-2 *<br>– – – – – | 1 | C 08 K 5<br>C 08 K 12<br>C 08 K 5:349) |
| | | | **TECHNICAL FIELDS SEARCHED (Int. Cl.5)** |
| | | | C 08 K<br>C 08 L |

The present search report has been drawn up for all claims

| Place of search | Date of completion of search | Examiner |
|---|---|---|
| The Hague | 10 December 90 | HOFFMANN K.W. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

 

& : member of the same patent family, corresponding
document